# EUROPÄISCHE PATENTSCHRIFT

(11) **EP 1 736 842 B1**
(45) Veröffentlichungstag und Bekanntmachung des Hinweises auf die Patenterteilung: **26.12.2012**
(21) Anmeldenummer: 06012223.1
(22) Anmeldetag: 14.06.2006
(51) Int. Cl.: G05B 19/414, G05B 19/4063, G05B 19/4065, G05B 19/048

(54) **Maschinensteuerung für eine gefahrbringende Aktionen ausführende Maschine wie Presse mit zumindest einem Abschaltpfad**
Machine control system for a machine carrying out dangerous actions, such as a press, comprising at least one disconnecting path
Commande de machine pour une machine réalisant des actions dangereuses, comme une presse, ayant au moins un circuit pour se déconnecter

(30) Priorität: 14.06.2005 DE 102005027581; 30.11.2005 DE 102005057588
(43) Veröffentlichungstag der Anmeldung: 27.12.2006
(73) Patentinhaber: Elan Schaltelemente GmbH & Co. KG, 35435 Wettenberg (DE)
(72) Erfinder: Müller, Frank, 73207 Plochingen (DE); Niehaus, Michael, 61197 Florstadt (DE); Kramer, Manfred, 35396 Giessen (DE)
(74) Vertreter: Stoffregen, Hans-Herbert

(56) Entgegenhaltungen:
- EP-A- 0 658 832
- EP-A- 1 050 708
- EP-A1- 0 846 992
- DE-A1- 4 432 768
- US-B1- 6 411 863
- SYKORA M R: "THE DESIGN AND APPLICATION OF REDUNDANT PROGRAMMABLE CONTROLLERS" CONTROL ENGINEERING, REED BUSINESS INFORMATION, HIGHLANDS RANCH, CO, US, Bd. 29, Nr. 8, Juli 1982 (1982-07), Seiten 77-79, XP002057993 ISSN: 0010-8049

## Beschreibung

Die Erfindung bezieht sich auf eine Maschinensteuerung für eine gefahrbringende Aktionen ausführende Maschine wie Presse nach dem Oberbegriff des Anspruchs 1.

Eine Maschinensteuerung dieser Art ist beispielsweise in der EP-A-0 846 992 beschrieben. Die Schaltungsanordnung weist einen Mikrocomputer auf, der über einen Kommunikationskanal mit mehreren Sctialtungskomplexen verbunden ist, in dem jeweils über eine Leistungshalbleiter-Endstufe jeweils ein elektrischer Verbraucher angeschlossen ist. Der Schaltungskomplex besteht dabei wiederum aus einem am Mikrocomputer angeschlossenen Rechnersystem und einer demselben zugeordnet, mit der Leistungshalbleiter-Endstufe verbundenen Interface-Einrichtung. Über diese Interface-Einrichtung werden an den Leistungshalbleiter-Endstufen auftretende physikalische Größen wie z. B. die elektrische Spannung, der elektrische Strom und die Temperatur erfasst und dem Rechnersystem zugeführt. Von demselben werden diese Größen verarbeitet und bei unzulässigen, zeitkritischen Veränderungen dieser Größen erfolgt durch die Hardware der betroffenen Interface-Einrichtungen, und zwar beispielsweise durch Abschaltung, eine entsprechende Reaktion.

Die EP-A-1 050 708 bezieht sich auf eine Steuerungsvorrichtung bzw. ein Verfahren zur Steuerung sicherheitsrelevanter Funktionen einer gefahrbringenden Maschine. Um die Reparaturkosten der gefahrbringenden Maschine zu reduzieren und gleichzeitig eine höhere Flexibilität bei erforderlich werdenden Änderungen der Methodik zur Signalauswertung zu gewährleisten, wird vorgeschlagen, die Auswerteelektronik an einer von dem Sicherheitsschalter beabstandeten Stelle der Maschine anzuordnen bzw. die Auswertung des Signals an einer von dem Sicherheitsschalter beabstandeten Stelle der Maschine durchzuführen. Hierzu wird eine zweikanalige Auswerteschaltung vorgeschlagen, wobei sicherheitsrelevante Signale jeweils einem Slave-Prozessor als auch einem Master-Prozessor zur redundanten Auswertung zugeführt werden. Die Auswerteelektronik ist als Bestandteil der Steuerelektronik-Anordnung ausgebildet, welche die sonstigen Betriebsfunktionen der gefahrbringenden Maschine steuert und daher ohnehin vorhanden ist. Diese kann auf einer einzigen Steuerelektronik-Platine vorgesehen sein, so dass davon auszugehen ist, dass beide Prozessoren mit derselben Zykluszeit betrieben werden.

Die DE-A-44 32 768 bezieht sich auf ein Verfahren zur Überwachung und Steuerung sicherheitsrelevanter Maschinenparameter und Betriebszustände und variables Sicherheitsmodul. Das Sicherheitsmodul umfasst eine dreikanalige Abschalteinheit, dreikanalige Überwachungseinheit sowie einen zweikanaligen Not-Aus-Interface-Kreis.

Die EP-A- 0 658 832 bezieht sich auf eine Einrichtung zur Steuerung einer Werkzeugmaschine oder eines Roboters, ohne den Einsatz von bislang notwendigen Endlagenschaltern. Es erfolgt eine durchgängig zweikanalige sichere Wegerfassung, die von einem Lage-Erfassungssystem mit Absolut- und Inkrementalgeber ausgeht, auf zwei Prozessorsysteme aus dem Numerikteil und der Antriebsregelung überleitet und dann auf Relais im Not-Aus-Kreis des Systems einwirkt.

Wenn es um schnelle Reaktionen von Steuerungen geht, auf Änderungen von Zuständen auf einer Eingangsebene mit Änderungen von Zuständen auf einer Ausgangsebene zu reagieren, ist bei Mikroprozessor-basierten Ausführungen von Steuerungen die sogenannte Zykluszeit von wesentlicher Bedeutung.

Zykluszeit ist bei Mikroprozessor-basierten Datenverarbeitungsanlagen die Zeit für einen sich periodisch wiederholenden Vorgang, z. B. Befehls-, Speicher-, Schreib- oder Lesezyklus. In erster Linie wird mit Zykluszeit die Zeitdauer bezeichnet, die für den folgenden Zyklus benötigt wird:
- Einlesen der Eingänge
- Berechnen der Stati der Ausgänge in Abhängigkeit der Applikation
- Setzen der Ausgänge.

In sicherheitsgerichtete Teile von Maschinensteuerungen, zum Beispiel Steuerungsteile, die dazu dienen, Menschen vor gefährlichen Maschinenbewegungen zu schützen, fließt die Zykluszeit als ein wesentliches Kriterium in die Sicherheitsbetrachtung ein, weil sie u. a. dazu beiträgt, die Sicherheitsabstände zwischen einer Schutzeinrichtung und einer gefahrbringenden Maschinenbewegung zu bestimmen.

Sicherheitsabstand ist dabei definiert als der Abstand, der erforderlich ist, dass ein Bediener - unter Zugrundelegung einer Zugriffsgeschwindigkeit von 1,6 m/s und der sogenannten Reaktionszeit der Maschine - eine gefahrbringende Bewegung nicht erreichen kann (vgl. hierzu auch DIN EN 999, Ausgabe 1998-12 "Sicherheit von Maschinen - Anordnung von Schutzeinrichtungen im Hinblick auf Annäherungsgeschwindigkeiten von Körperteilen").

Aus Gründen der Maschinen-Produktivität wird man im Regelfall immer versuchen, diese Sicherheitsabstände so gering wie möglich zu halten.

Die Zykluszeit ist bei der Sicherheitsbetrachtung Bestandteil der sogenannten sicherheitsgerichteten Reaktionszeit eines Systems. Sie ist definiert als die Zeit vom elektrischen Erkennen einer sicherheitsrelevanten Anforderung bis zur Ausführung an den Stellgliedern.

Zum Beispiel besteht an Steuerungen von Abkantpressen die Notwendigkeit, sehr schnell zu reagieren. Hier legt eine Bedienperson das zu bearbeitende Werkstück ein und die Presse senkt sich ab. In dieser Situation besteht die Gefahr, dass die Hand des Bedieners gequetscht werden kann. Um dies zu verhindern, gibt es Schutzeinrichtungen, die mittels eines (oder mehrerer) Lichtstrahlen (oder anderer Erfassungsprinzipien) detektieren, ob sich die Hand des Bedieners noch im Arbeitsbereich der Presse befindet und entsprechende sicherheitsgerichtete Steuerbefehle erzeugen. Da es sich hier um Abstände von wenigen cm handelt, muss die Abschaltung sehr schnell durchgeführt werden.

Davon ausgehend liegt der Erfindung die Aufgabe zu Grunde, eine Maschinensteuerung der eingangs genannten Art derart weiterzubilden, dass ein Test der Maschinensteuerung unter Berücksichtigung sicherheitsgerichteter Anforderungen durchführbar ist.

Die Aufgabe wird erfindungsgemäß durch die Merkmale des Anspruchs 1 gelöst.

Der Erfindung liegt daher die Idee zugrunde, bestimmte Steuerbefehle nicht über die Prozessoren der Maschinensteuerung zu veranlassen, sondern direkt als Logik beispielsweise auf der Leiterplatte als gedruckte oder diskrete Schaltung abzubilden. D. h., es erfolgt eine direkte elektrische Verbindung zwischen den Eingängen und Ausgängen der Maschinensteuerung, so dass eine Signalübertragung innerhalb von ms (ohne Zykluszeit etc.) möglich ist.

Diese Maßnahme würde aber die sicherheitsgerichteten Anforderungen nicht erfüllen. Zum Beispiel würden die erforderlichen Tests von diskreten elektronischen Bauelementen nicht durchgeführt werden können, weil im Zeitraum der Testung mit der Anforderung einer Sicherheitsfunktion gerechnet werden muss.

Unterscheidet man jedoch in der Logik der Steuerung, ob sich das Pressenwerkzeug nach unten bewegt und deshalb eine potenzielle gefahrbringende Bewegung darstellt oder sich das Pressenwerkzeug nach oben bewegt und die Bewegung deshalb für den Bediener gefahrlos ist, ist der vorgenannte Lösungsweg auch sicherheitstechnisch machbar.

Gemäß der Erfindung ist daher vorgesehen, dass der zumindest eine Abschaltpfad einen Test-Schaltkreis aufweist, mit dem der Eingang des Abschaltpfades definiert auf "OFFEN" steuerbar ist und dass während eines Zeitraums, in dem die Maschine eine gefahrlose Aktion ausführt, ein Test des Logik-Schaltkreises durchführbar ist.

Damit die Maschinensteuerung für Anwendungen geeignet ist, die den Anforderungen von Steuerungskategorie 4 gemäß EN 954-1 bzw. SIL 3 gemäß IEC 61508 bzw. Performance Level "e" gemäß prISO 13849-1 entspricht, ist vorgesehen, dass der Abschaltpfad zweikanalig ausgebildet ist, wobei jeder Kanal jeweils den Logik-Schaltkreis und zumindest eine Steuereinheit aufweist, wobei der Test-Schaltkreis des ersten Kanals durch die Steuereinheit des zweiten Kanals überbrückbar ist und umgekehrt.

Wenn die Maschine eine gefahrlose Aktion ausführt, beispielsweise eine Presse nach oben fährt, kann dieser Zeitabschnitt zur Testung der Ausgänge der zu steuernden Maschine benutzt werden. Damit in diesem Fall keine Abschaltungen erzeugt werden, wird die Abschaltung mittels des Logik-Schaltkreises durch die Steuerschaltung überbrückt. Die Aktivierung bzw. Deaktivierung der Überbrückung unterliegt nicht denselben zeitkritischen Anforderungen.

Um einen Datenvergleich der als Mikroprozessoren ausgebildeten Steuereinheiten durchzuführen, sind diese über eine Datenleitung miteinander gekoppelt.

In einer weiteren bevorzugten Ausführungsform ist vorgesehen, dass die Steuereinheiten der einzelnen Kanäle jeweils einen Eingang zum Einlesen der Eingangssignale jeden Kanals aufweisen, wobei die jeweiligen Eingänge vorzugsweise mit einem Ausgang des Test-Schaltkreises verbunden sind.

Um Störungen aus dem Eingangssignal zu filtern weist jeder Kanal einen vorzugsweise mittels der Steuereinheit des jeweils anderen Kanals einstellbaren Filter-Schaltkreis auf, wobei eine Filterzeit des Filter-Schaltkreises zum Filtern von Störungen mit Laufzeiten im Bereich von z. B. 0,6 bis 4,3 ms einstellbar ist.

Zur Durchführung von weiteren Tests ist zudem vorgesehen, dass der Test-Schaltkreis eines Kanals mit einer Steuereinheit des jeweils anderen Kanals verbunden ist. Dadurch kann das Eingangssignal definiert auf "OFFEN" gesetzt werden.

Zur Testung des Ausgangs der Maschinensteuerung ist vorgesehen, dass dieser mit einem Eingang der Steuereinheit des jeweils anderen Kanals verbunden ist. Zur Testung des Ausgangs erfolgt ein Rücklesen durch die Steuereinheit, d. h. es kann ein kreuzweiser Datenvergleich zwischen der ersten Steuereinheit und der zweiten Steuereinheit durchgeführt werden. Im Rahmen dieses Datenvergleichs kann der Filter-Schaltkreis und der Logik-Schaltkreis überprüft werden.

Zusammengefasst ergeben sich folgende Eigenschaften der Schaltung:
- schnelle Abschaltung eines Ausgangs bei Eingangsänderung
- Überbrückung der Abschaltung durch eine langsamere Steuereinheit mittels eines Logik-Schaltkreises
- einstellbare Filterzeit zur Toleranz gegen Störungen und Filterzeit und Logik können getestet werden.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

### Es zeigen:

- Fig. 1: ein Zeit-/Wegdiagramm einer gefahrbringenden, Bewegung und
- Fig. 2: ein Blockschaltbild eines Abschaltpfades.

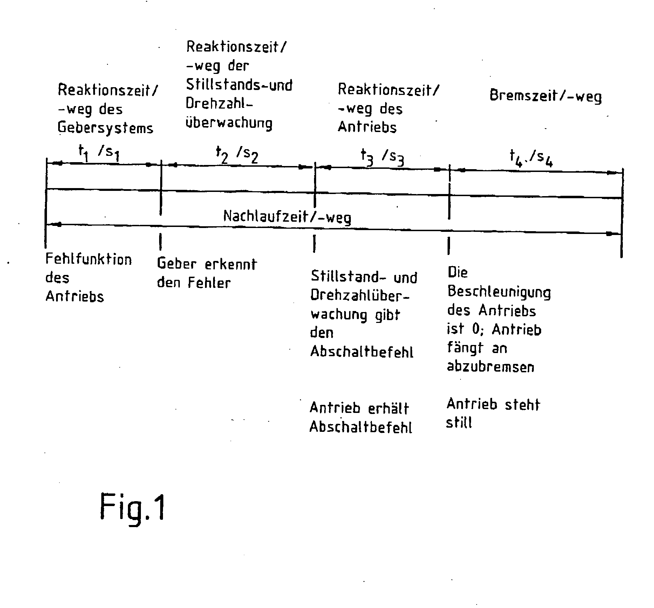

Fig. 1 zeigt ein Zeit-/Wegdiagramm einer gefahrbringenden Bewegung, in dem Zeit-/Wegabschnitte ab dem Eintritt einer Fehlfunktion eines Antriebs bis zum. Stillstand des Antriebs dargestellt sind.

Ein Zeit-/Wegabschnitt t₁/s₁ kennzeichnet die/den ReaKtionszeit/-weg des Gebersystems nach einer Fehlfunktion des Antriebs. Nachdem ein Geber die Fehlfunktion des Antriebs erkannt hat, folgt ein Zeit-/Wegabschnitt t₂/s₂, in dem eine Stillstands- und Drehzahlüberwachung erfolgt. Ein dritter Zeit-/Wegabschnitt t₃/s₃ kennzeichnet die/den Reaktionszeit/-weg des Antriebs, d. h. den Zeit-/Wegabschnitt t₃/s₃ innerhalb dessen die Stillstands- und Drehzahlübcrwachung den Abschaltbefehl gibt und der Antrieb den Abschaltbefehl erhält.

Ein vierter Zeit-/Wegabschnitt t₄/s₄ kennzeichnet die Bremszeit bzw. den Bremsweg, innerhalb der der Antrieb bis zum Stillstand abgebremst wird. Die Summe der Zeit-/Wegabschnitte t₁/s₁ ... t₄/s₄ beschreibt die Gesamtnachlaufzeit bzw. den Gesamtnachlaufweg. Die Fig. 1 zeigt, dass von der Fehlfunktion des Antriebs bis zum Stillstand des Antriebs eine nicht unerhebliche Zeit vergeht, innerhalb der eine gefahrbringende Aktion einer Maschine ausgeführt wird. Die Fig. 1 zeigt auch, wie wichtig eine schnelle Abschaltung eines Ausgangs als Reaktion auf eine Eingangsänderung ist.

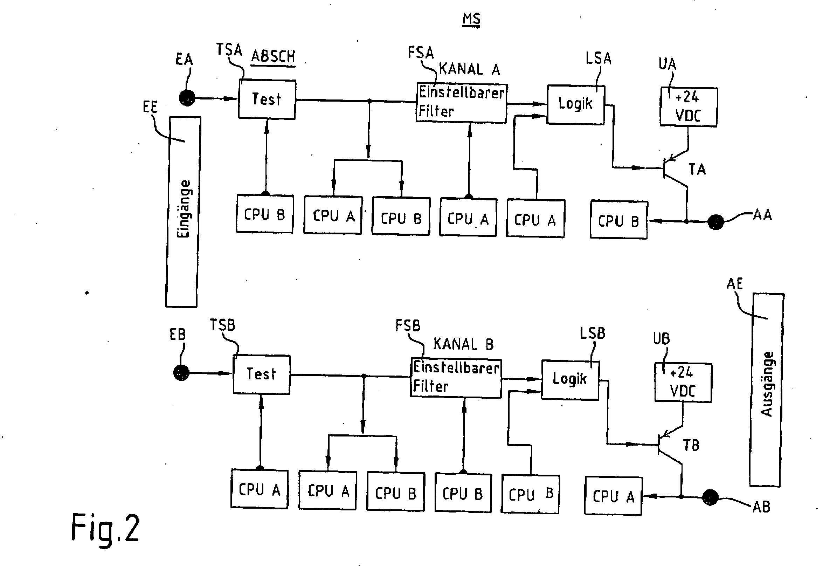

Fig. 2 zeigt ein Blockschaltbild eines Abschaltpfades ABSCH, als sicherheitsgerichteter Steuerungsteil einer Maschinensteuerung MS. Der Abschaltpfad ABSCH ist zweikanalig aufgebaut und umfasst einen ersten Kanal A sowie einen zweiten Kanal B. Jedem Kanal A, B ist ein Eingang EA, EB einer Eingangsebene EE zugeordnet sowie ein Ausgang AA, AB einer Ausgangsebene AE.

Im dargestellten Ausführungsbeispiel weist jeder Kanal A, B einen Logik-Schaltkreis LSA, LSB auf, dessen Eingang über einen Filter-Schaltkreis FSA, FSB sowie einen Test-Schaltkreis TSA, TSB mit jeweils dem Eingang EA, EB verbunden ist. Ein Ausgang des Logik-Schaltkreises LSA, LSB ist mit einem Steuereingang eines elektronischen Schaltelementes TA, TB verbunden, an dessen Eingang eine Spannung UA, UB anliegt und dessen Ausgang den Ausgang AA bzw. AB bildet.

Nachfolgend erfolgt eine Funktionsbeschreibung des Kanals B, die ebenfalls auf den Kanal A übertragbar ist, da die Kanäle A, B redundant ausgebildet sind.

Der Test-Schaltkreis TSB ist eingangsseitig mit dem Eingang EB verbunden. Über einen Steuereingang ist der Test-Schaltkreis TSB mit einer Steuereinheit CPUA des Kanals A verbunden. Mit dem Test-Schaltkreis TSB ist es möglich, den Eingang EB definiert auf "OFFEN" zu setzen. Die Ansteuerung des Test-Schaltkreises TSB erfolgt durch die Steuereinheit CPUA. Hierbei ist zu beachten, dass die Steuerschaltung CPUB des Kanals B eine Überbrückung des Logik-Schaltkreises LSB durchführt, so dass über einen kreuzweisen Datenvergleich der Steuereinheiten CPUA, CPUB Fehler aufgedeckt werden können.

Ein Ausgang des Test-Schaltkrcises TSB ist jeweils unmittelbar mit einem Eingang der Steuereinheit CPUA sowie CPUB verbunden, so dass als zusätzliche Kontrolle beide Steuereinheiten das Eingangssignal ungefiltert einlesen können. Des Weiteren ist der Ausgang des Test-Schaltkreises TSB mit einem Eingang des Filter-Schaltkreises FSB verbunden, der einen Steuereingang aufweist, der mit einem Ausgang der Steuereinheit CPUB verbunden ist. Somit ist es möglich, über die Steuereinheit CPUB eine Einstellung einer Filterzeit durchzuführen. Je nach Einstellung werden Störungen des Eingangssignals von 0,6 ms, 0,85 ms, 1,1 ms ... herausgefiltert.

Ferner ist ein Eingang des Logik-Schaltkreises LSB mit einem Ausgang der Stenereinhcit CPUB verbunden, so dass der Logik-Schaltkreis LSB mittels der Steuereinheit CPUB überbrückt werden kann. Wenn die zu steuernde Maschine eine nicht gefahrbringende Aktion ausführt, können in diesem Zeitraum beispielsweise die Ausgänge AA, AB der Maschinensteuerung getestet werden. Damit in diesem Fall keine Abschaltungen erzeugt werden, kann die Abschaltfunktion mittels der Logik mit Hilfe der Steuereinheit CPUB überbrückt werden. Die Aktivierung/Deaktivierung der Überbrückung unterliegt nicht denselben zeitkritischen Anforderungen.

Des Weiteren ist vorgesehen, dass der Ausgang AB mit einem Eingang der Steuereinheit CPUA verbunden ist. Bekanntlich erfolgt die Ansteuerung des Ausgangs AB über den Logik-Schaltkreis LSB. Zur Testung erfolgt ein Rücklesen durch die Steuereinheit CPUA, d. h. es kann ein kreuzweiser Datenvergleich zwischen der Steuereinheit CPUA und der Steuereinheit CPUB durchgeführt werden. Im Rahmen dieses Datenvergleichs kann der Filter-Schaltkreis FSB sowie der Logik-Schaltkreis LSB überprüft werden.

Zusammengefasst ergeben sich folgende Eigenschaften der Schaltung:
- schnelle Abschaltung eines Ausgangs bei Eingangsänderung,
- Überbrückung der Abschaltung durch eine langsamere CPU mittels eines Logik-Schaltkreises,
- einstellbare Filterzeit zur Toleranz gegen Störungen,
- Filterzeit und Logik können getestet werden.

## Patentansprüche

1. Maschinensteuerung (MS) für eine gefahrbringende Aktionen ausführende Maschine wie Presse mit zumindest einem Abschaltpfad (ABSCH) zum Abschalten zumindest eines Ausgangs (AA, AB) der Maschinensteuerung (MS) aufgrund einer Zustandsänderung an zumindest einem Eingang (EA, EB) dieser, wobei der Abschaltpfad (ABSCH) zumindest für zeitkritische Steuerbefehle einen von einer Zykluszeit der Maschinensteuerung (MS) unabhängigen Logik-Schaltkreis (LSA, LSB) aufweist,
**dadurch gekennzeichnet,**
**dass** der zumindest eine Abschaltpfad (ABSCH) einen Test-Schaltkreis (TSA, TSB) aufweist, mit dem der Eingang (EA, EB) des Abschaltpfades (ABSCH) definiert auf "OFFEN" steuerbar ist, dass ein Test des Logik-Schaltkreises (LSA, LSB) während eines Zeitraums durchführbar ist, in dem die Maschine eine gefahrlose Aktion ausführt, und
**dass** der Abschaltpfad (ABSCH) zweikanalig ausgebildet ist, umfassend einen ersten Kanal (A) und einen zweiten Kanal (B), wobei jeder Kanal (A, B) jeweils den Logik-Schaltkreis (LSA, LSB) und zumindest eine Steuereinheit (CPUA, CPUB) aufweist, wobei der Logik-Schaltkreis (LSA, LSB) des ersten Kanals (A, B) durch die Steuereinheit (CPUA, CPUB) des zweiten Kanals (A, B) überbrückbar ist und umgekehrt.

2. Maschinensteuerung nach Anspruch 1,
**dadurch gekennzeichnet,**
**dass** der Test-Schaltkreis (TSA, TSB) jeweils eines der Kanäle (A, B) mittels der Steuereinheit (CPUA, CPUB) des jeweils anderen Kanals (A, B) steuerbar ist.

3. Maschinensteuerung nach Anspruch 1,
**dadurch gekennzeichnet,**
**dass** die Steuereinheiten (CPUA, CPUB) als Mikroprozessoren bzw. Mikrocontroller ausgebildet sind, welche zum Datenvergleich über eine Datenleitung miteinander gekoppelt sind.

4. Maschinensteuerung nach Anspruch 1,
**dadurch gekennzeichnet,**
**dass** die Steuereinheiten (CPUA, CPUB) der einzelnen Kanäle (A, B) jeweils einen Eingang zum Einlesen der Eingangssignale jeden Kanals (A, B) aufweisen, wobei die jeweiligen Eingänge vorzugsweise mit einem Ausgang des Test-Schaltkreises (TSA, TSB) verbunden sind.

5. Maschinensteuerung nach Anspruch 1,
**dadurch gekennzeichnet,**
**dass** jeder Kanal (A, B) ein vorzugsweise mittels der Steuereinheit (CPUA, CPUB) des jeweils anderen Kanals (A, B) einstellbaren Filter-Schaltkreis (FSA, FSB) aufweist, wobei eine Filterzeit des Filter-Schaltkreises (FSA, FSB) zum Filtern von Störungen mit Laufzeiten im Bereich von z. B. 0,6 bis 4,3 ms einstellbar ist.

6. Maschinensteuerung nach Anspruch 1,
**dadurch gekennzeichnet,**
**dass** der Ausgang (AA, AB) eines Kanals (A, B) mit einem Eingang der Steuereinheit (CPUA, CPUB) des jeweils anderen Kanals (A, B) verbunden ist.

7. Maschinensteuerung nach Anspruch 1,
**dadurch gekennzeichnet,**
**dass** der Logik-Schaltkreis (LSA, LSB) als gedruckte Schaltung (Chip) oder diskret aufgebaut ist.

## Claims

1. Machine control (MS) for a machine such as a press performing hazardous actions, having at least one shutdown path (ABSCH) for shutting down at least one output (AA, AB) of the machine control (MS) due to a change in the state of at least one input (EA, EB) thereof, with the shutdown path (ABSCH) having at least for time-critical control commands a logic circuit (LSA, LSB) independent of a cycle time of the machine control (MS),
**wherein**
the at least one shutdown path (ABSCH) has a test circuit (TSA, TSB) using which the input (EA, EB) of the shutdown path (ABSCH) can be set in a defined manner to "OPEN", wherein a test of the logic circuit (LSA, LSB) can be conducted during a period in which the machine is performing a non-hazardous action and
wherein the shutdown path (ABSCH) is of two-channel design, comprising a first channel (A) and the second channel (B) with each channel (A, B) having a logic circuit (LSA, LSB) and at least one control unit (CPUA, CPUB), where the logic circuit (LSA, LSB) of the first channel (A, B) can be overridden by the control unit (CPUA, CPUB) of the second channel (A, B) and vice versa.

2. Machine control according to Claim 1,
**wherein**
the test circuit (TSA, TSB) of each of the channels (A, B) can be controlled by means of the control unit (CPUA, CPUB) of the other channel (A, B).

3. Machine control according to Claim 1,
**wherein**
the control units (CPUA, CPUB) are designed as microprocessors or microcontrollers that are linked to one another by a data line for data comparison.

4. Machine control according to Claim 1,
**wherein**
the control units (CPUA, CPUB) of the individual channels (A, B) each have an input for entry of the input signals of each channel (A, B), with the respective inputs being preferably connected to an output of the test circuit (TSA, TSB).

5. Machine control according to Claim 1,
**wherein**
each channel (A, B) has a filter circuit (FSA, FSB) preferably settable by means of the control unit (CPUA, CPUB) of the other channel (A, B), with a filter time of the filter circuit (FSA, FSB) being settable to running times in the range from 0.6 to 4.3 ms, for example, for filtering of interference.

6. Machine control according to Claim 1,
**wherein**
the output (AA, AB) of a channel (A, B) is connected to an input of the control unit (CPUA, CPUB) of the other channel (A, B).

7. Machine control according to Claim 1,
**wherein**
the logic circuit (LSA, LSB) is constructed as a printed circuit (chip) or discretely.

## Revendications

1. Commande de machine (MS) pour une machine effectuant des opérations dangereuses, telle qu'une presse, ladite commande comprenant au moins un circuit de coupure (ABSCH) pour déconnecter au moins une sortie (AA, AB) de la commande de machine (MS) en raison d'un changement d'état sur au moins une entrée (EA, EB) de celle-ci, sachant que
le circuit de coupure (ABSCH) présente au moins pour des instructions de commande chronologiquement critiques un circuit virtuel (LSA, LSB) indépendant du temps de cycle de la commande de machine (MS), **caractérisée en ce**
**que** l'au moins un circuit de coupure (ABSCH) présente un circuit de test (TSA, TSB) avec lequel l'entrée (EA, EB) du circuit de coupure (ABSCH) peut être commandée définie « OUVERTE », qu'un test du circuit virtuel (LSA, LSB) peut être réalisé pendant un intervalle de temps dans lequel la machine effectue une opération sans danger, et
**que** le circuit de coupure (ABSCH) est conçu à deux voies, comprenant une première voie (A) et une seconde voie (B), sachant que chaque voie (A, B) présente respectivement le circuit virtuel (LSA, LSB) et au moins une unité de commande (CPUA, CPUB), et que le circuit virtuel (LSA, LSB) de la première voie (A, B) peut être ponté par l'unité de commande (CPUA, CPUB) de la seconde voie (A, B) et inversement.

2. Commande de machine selon la revendication 1,
**caractérisée en ce**
**que** le circuit de test (TSA, TSB) d'une des voies (A, B) peut être commandé au moyen de l'unité de commande (CPUA, CPUB) de l'autre voie (A, B).

3. Commande de machine selon la revendication 1,
**caractérisée en ce**
**que** les unités de commande (CPUA, CPUB) sont conçues en tant que microprocesseurs et/ou microcontrôleurs qui sont couplés entre en eux via une ligne de transmission de données afin de comparer les données.

4. Commande de machine selon la revendication 1,
**caractérisée en ce**
**que** les unités de commande (CPUA, CPUB) des voies respectives (A, B) présentent chacune une entrée pour lire les signaux d'entrée de chaque voie (A, B), sachant que les entrées respectives sont de préférence reliées à une sortie du circuit de test (TSA, TSB).

5. Commande de machine selon la revendication 1,
**caractérisée en ce**
**que** chaque voie (A, B) présente un circuit filtrant (FSA, FSB) réglable de préférence au moyen de l'unité de commande (CPUA, CPUB) de l'autre voie (A, B), sachant qu'un temps de filtrage du circuit filtrant (FSA, FSB) pour filtrer des perturbations peut être réglé sur des durées d'exécution comprises dans la plage de par exemple 0,6 à 4,3 ms.

6. Commande de machine selon la revendication 1,
**caractérisée en ce**
**que** la sortie (AA, AB) d'une voie (A, B) est reliée à une entrée de l'unité de commande (CPUA, CPUB) de l'autre voie (A, B).

7. Commande de machine selon la revendication 1,
**caractérisée en ce**
**que** le circuit virtuel (LSA, LSB) est conçu en tant que circuit imprimé (puce) ou de manière discrète.
